# EUROPEAN PATENT SPECIFICATION

(11) **EP 1 607 465 B1**
(45) Date of publication and mention of the grant of the patent: **10.04.2013**
(21) Application number: 04104378.7
(22) Date of filing: 10.09.2004
(51) Int. Cl.: C10G 45/34, C10G 45/36, B01J 33/00, B01J 23/85, B01J 23/70, B01J 37/20, B01J 27/043, B01J 27/051, B01J 21/04, B01J 23/74, B01J 35/02, B01J 35/10

(54) **Process for producing a particulate catalyst comprising pyrophoric metal and stabilized by paraffin wax, catalyst produced by this method and use of such catalyst**
Verfahren zur Herstellung von Katalysatorpartikeln beinhaltend pyrophores Metall und durch Paraffinwachs stabilisiert, nach der Methode hergestellter Katalysator und Verwendung des Katalysators
Procédé pour la production d'un catalyseur particulaire comprenant un métal pyrophorique et stabilisé par de la cire de paraffine, catalyseur produit par ce procédé et utilisation du catalyseur

(30) Priority: 11.09.2003 EP 03020689
(43) Date of publication of application: 21.12.2005
(73) Proprietor: Shell Internationale Research Maatschappij B.V., 2596 HR Den Haag (NL)
(72) Inventor: Birke, Peter, D-06237 Leuna (DE); Neubauer, Hans-Dieter, D-06237 Leuna (DE); Van der Zeijden, Dolf, D-06237 Leuna (DE)

(56) References cited:
- EP-A- 0 897 748
- US-A- 1 390 683
- US-A- 3 453 217
- US-A- 3 563 912

## Description

The present invention relates to a method for producing particulate catalyst containing at least one pyrophoric metal in reduced form and a metal oxide carrier, and to a catalyst produced by that method. Examples of pyrophoric metals are Ni, Co, Cu and Mo and mixtures thereof. Examples of metal oxide carriers are the oxides of aluminium, silicon, titanium, zirconium, magnesium, and mixtures thereof.

Such reduced metal catalysts are widely used, for example in hydrogenation reactions. However the metals in their catalytically active, i.e. finely divided and reduced, form are pyrophoric - i.e. when exposed to atmospheric air they tend to oxidize very rapidly, thereby producing considerable heat. Hence, safety measures are required in the production, storage and handling of these catalysts.

The stabilization of such catalysts by partial oxidation of the finely divided reduced metal is known (US-A 4,090,980; DD-B 156169). However it is not sufficiently protective.

It is also known to protect such catalysts by coating the catalysts with fatty material.

In DD-B 155390 there is disclosed a method for preparing pyrophoric metal catalysts in powder form, wherein the powder is suspended in an excess of molten fatty material such as solid paraffin, and the suspension is simultaneously sprayed and cooled.

In DE-A 2850719 there is disclosed a method for preparing nickel catalysts in powder form, wherein the powder is impregnated with a solution of fatty material, followed by removing the solvent.

In South African Patent 961848 there is disclosed a method for preparing a wax encapsulated particulate pyrophoric catalyst comprising (a) placing a porous container containing particulate pyrophoric catalyst into a vat of melted paraffin wax for a sufficient time to allow said wax to coat said particulate catalyst; (b) removing said container from said vat and (c) allowing said paraffin to cool and harden whereby a continuous oxygen excluding coating is formed over each particle of catalyst. The resulting particulate pyrophoric catalyst encapsulated in a paraffin wax is also claimed. This document also does not mention stabilization by partial oxidation.

US patents 3 563 912 and 3 453 217 disclose further methods for preparing wax encapsulated particulate pyrophoric-catalysts.

The present inventors found that catalysts prepared according to SA 961848, while indeed being sufficiently protected from spontaneous oxidation by air, tend to cake and clog together, especially during transport. Their bad flowing property which apparently is due to the particles being encapsulated with a continuous paraffin coating, is obviously detrimental to the uniform filling of fixed-bed reactors with these particles.

It has now been found that when the catalyst particles are of sufficient porosity they can be treated with paraffin wax in such a way that the paraffin wax is adsorbed into their pores rather than being coated on their outside, and that the thus prepared porous catalyst particles have excellent flow properties along with being protected from undue oxidation. This effect is reached by mixing the particles gently with an amount of molten paraffin wax not exceeding the total pore volume of the particulate catalyst material used.

Accordingly, the present invention provides a particulate catalyst containing at least one pyrophoric metal in reduced and optionally stabilized form and a metal oxide carrier and additionally containing paraffin wax, wherein the catalyst particles have a pore volume in the range of from 0.2 to 0.8 cm³/g and the paraffin wax is present in an amount in the range of 30 to 95 vol%, basis the pore volume of the catalyst particles.

The present invention further provides a process for producing a particulate catalyst, wherein particles comprising at least one pyrophoric metal in reduced and optionally stabilized form and having a pore volume in the range of from 0.2 to 0.8 cm³/g are treated by gentle mixing with molten paraffin wax in an amount in the range of from 30 to 95 vol%, basis the pore volume of the catalyst particles, for a time sufficient to absorb substantially the whole amount of paraffin wax into the catalyst particles.

Preferred catalysts according to the present invention are those wherein the catalytic metal is selected from the group of nickel, cobalt, molybdenum and copper and mixtures thereof, and the carrier material is selected from the group of alumina, silica, titania, zirconia and magnesia and mixtures thereof. Particularly preferred are catalysts comprising nickel or cobalt on alumina or silica carriers.

The catalyst particles may be of any possible regular or irregular shape, such as spheres, granules, cylinders, cubes, trilobes and pipes. Their diameter is preferably from 1 to 4 mm, more preferably from 1.3 to 3 mm. Their greatest dimension is advantageously chosen from 1 to 10 mm, and preferably from 1.3 to 7 mm. Their preferred pore volume is from 0.3 to 0.6 cm³/g.

The paraffin waxes used according to the present invention are preferably substantially free of unsaturated compounds. Suitably they have a melting point in the range of from 60 to 150 °C. The temperature during mixing will be chosen according to the properties of the paraffin wax used and thus it will also be chosen from 60 to 150 °C. The preferred amount of paraffin wax used is from 50 to 95 vol%, the more preferred amount from 70 to 95 vol%, basis to pore volume of the catalyst particles.

A measure of the stability of the particulate catalysts against undue oxidation is their ignition temperature in a stream of air. By this measure, catalyst particles according to the present invention were found to exhibit an ignition temperature (expressed in °C) about twice that found in non-impregnated catalyst particles.

Catalyst particles according to the present invention were found to have their flow properties better preserved than catalyst particles prepared according to SA 96848. A measure of the preserved flow properties of the particulate catalysts is that, following impregnation with the paraffin wax, the original diameters of the individual particles are not increased more than twice.

By taking care to mix the catalyst particles with the relatively small amount of molten paraffin wax in a gentle way and during the minimum time needed for fully adsorbing the paraffin wax, undue loss of catalyst material by abrasion is avoided. Preferably, the gentle mixing is done such that the loss by abrasion is not more than 1 wt%, more preferably not more than 0.5 wt%.

The mixing time depends on the materials used. Generally it will be in the range of from 2 to 60 minutes. During mixing, the container in which the catalyst particles are mixed with the paraffin wax is preferably loaded for 20-80%, more preferably 25-50%, of its volume.

Advantageously the catalyst particles are introduced into the mixing container in pre-heated form, in order to avoid undue heat loss inside the container and difficulty in controlling the mixing time. In that case the preheating temperature has of course to remain below the ignition temperature. Depending on the case, the preheating of the catalyst particles can be to a temperature in the range of from 30 to 120 °C.

The catalytic metal of the particles, which is originally present in cationic form, is reduced to its elemental form prior to the waxing treatment in conventional manner, such as treating with a hydrogen containing gas. The optional partial oxidation is also conventional, such as is described for example in US-A 4,090,980 and in DD-B 156169.

A particular embodiment of the present invention relates to catalysts used for the selective hydrogenation of highly unsaturated hydrocarbons, such as alkynes, diolfins and styrenes, which are present as contaminating by-products of e.g. steam crackers. The main products are alkanes and simple unsaturates (alkenes and aromatics) and they are to be preserved, while the highly unsaturated compounds are undesirable because they tend to produce gum. The catalysts used for the selective removal of these highly unsaturated compounds are characterized in that their catalytic metals are at least partly sulfurized, i.e. the metal is present as its sulfide. This sulfurization can be performed after loading the catalyst into the reactor (in-situ), e.g. by a mixture of H₂S and H₂ at elevated temperature, but the much preferred method is to add to the catalyst ex-situ elemental sulfur or an organic sulfur compound and complete the reaction with the catalytic metal to the metal sulfide in-situ, by leading only H₂ at elevated temperature into the reactor. The addition of elementary or organic sulfur to the catalyst is known as presulfurization.

In US-A 4,530,917 there is disclosed a process for such presulfurization by treating the catalyst with a solution in an organic solvent of a compound having the general formula R-S(n)-R', wherein n is an integer of from 3 to 20 and the radicals R and R', identical or different, contain 1 to 150 carbon atoms (R' being alternatively a hydrogen atom).

In US-A 5,215,954 there is disclosed a process for such presulphurization by contacting the catalyst with elemental sulfur at elevated temperature, followed by heating in the presence of a liquid olefinic hydrocarbon.

The catalysts of the present invention can be presulfurized by either elemental sulfur or organic sulfur compounds, as described in the above documents, before stabilization of the particles with the paraffin wax.

However, presulfurization and stabilization can be very efficiently performed in one step by mixing from 1 to 30 wt% of an organic sulfur compound with the paraffin wax according to the present invention. Contrary to elemental sulfur, organic sulfur compounds generally have the advantage of being soluble in the paraffin wax.

By using a mixture of paraffin wax and organic sulfur, all advantages of stabilizing the catalyst while preserving its flow properties, combined with those of presulfurization, are achieved at once.

Accordingly, the present invention further relates to a particulate catalyst as defined above and to a process for producing such particulate catalyst, characterized in that the paraffin wax contains an organic sulfur compound, in an amount in the range of from 1 to 30 wt% and preferably from 10 to 25 wt%.

Preferably, the organic sulfur compound is an organic polysulfide having the general formula R-S(n)-R', wherein n is an integer of from 2 to 10 and R and R' independently are selected from saturated or unsaturated, linear, cyclic and/or branched organic radicals containing from 1 to 20 carbon atoms, which may optionally contain hetero atoms, R' being alternatively a hydrogen atom. These compounds preferably have a sulfur content in the range of from 10 to 70%, more preferably from 20 to 40%, of their weight.

Preferably the sulfur content in the mixture of paraffin wax and organic sulfur compound will be in the range of from 2 to 10 wt%.

Non-limiting examples of such organic polysulfide compounds are dimethyl polysulfide; di(hydroxyethyl)polysulfide; di(sec or tert-butyl) polysulfide; di(cyclohexyl) polysulfide; di(n-octyl) polysulfide; di (sec or tert-nonyl) polysulfide; di(sec or tert-decyl) polysulfide; and di(sec or tert-dodecyl) polysulfide. Therein, the term polysulfide usually stands for a chain of 2 to 8 sulfur atoms.

Such organic polysulfides are being sold by Elf Aquitaine and Atofina under the trade names TPS 32 (32 wt% sulfur) and TS 37 (37 wt% sulfur), by Chevron and Phillips under the trade names TBNS 454 and TNPS 537, and by Lubrizol under the trade name Sulfrzol 54.

The following examples will illustrate the invention.

### Example 1 (comparative)

Particles of cylindrical extrudate having a diameter of 1.3 mm and a mean length of about 5 mm and composed of 70 wt% of cationic nickel, balance Al₂O₃ were reduced by heating at 450 °C in a stream of H₂ (GHSV = 1000) during 5 hours. The H₂ was then flushed by a stream of N₂ (GHSV = 1000) while cooling the particles gradually to 50 °C. When the temperature reached 50 °C, air was added to the N₂ stream to produce an O₂ content of 3 vol% in the gas stream entering the particles. This treatment by a low concentration of air was continued until the O₂ content in the gas leaving the particles equalled 3 vol%, meanwhile taking care not to exceed a temperature increase of more than 40 °K in the catalyst bed.

The resulting activated and partially oxidized catalyst particles had a BET surface area of 150 m²/g and a pore volume of 0.43 cm³/g. The ignition temperature in air at ambient pressure was found to be 122 °C.

The diameter and length of the catalyst particles were determined with the help of a dedicated software program in a PC, working with a high-resolution flat bed scanner on which a random sample of 200 particles is deposited.

### Example 2

500 grams of activated and partially oxidized catalyst particles produced according to Example 1 (total pore volume 215 ml) were heated to 50 °C in a two-liter stainless steel drum. Subsequently 194 ml (corresponding to about 90% of the total pore volume) of molten paraffin wax (Terhell™ 3280, provided by Schumann-Sasol, having a melting temperature of 75-80 °C) was introduced at 130 °C over a period of 15 minutes into the drum, which was meanwhile rotated at 25 rpm. Following completion of the addition of the molten paraffin wax, the particles were left in the rotating drum for another 15 minutes and subsequently allowed to cool off to ambient temperature.

The thus prepared catalyst particles were found to be free-flowing and displayed no caking. In a random sample of 200 of the particles, none was found to have a diameter reaching twice the original diameter of 1.3 mm. The amount lost by abrasion during the treatment was less than 0.1 wt%. The ignition temperature in air at ambient pressure was found to be 210 °C.

### Example 3

500 grams of activated and partially oxidized catalyst particles produced according to Example 1 (total pore volume 215 ml) were treated as in Example 2, except that the amount of paraffin wax was 110 ml (corresponding to about 51% of the total pore volume) and the introduction time thereof into the drum was 5 minutes.

The thus prepared catalyst particles were also found to be free-flowing with no caking. In a random sample of 200 of the particles, none was found to have a diameter reaching twice the original diameter of 1.3 mm. The amount lost by abrasion during the treatment was 0.2 wt%. The ignition temperature in air at ambient pressure was found to be 165 °C.

### Example 4

400 grams of activated and partially oxidized catalyst particles produced according to Example 1 (total pore volume 172 ml) were mixed with 107 g (corresponding to about 62% of the total pore volume) of paraffin wax (same material as in Example 2) and the mixture heated to 85 °C over 30 minutes in the rotating (25 rpm) 2-liter stainless steel drum. The temperature in the rotating drum was kept at 85 °C for another 15 minutes, following which the treatment was terminated by stopping the drum and allowing the catalyst particles to cool off to ambient temperature.

The thus prepared catalyst particles were found to be free-flowing with no caking. In a random sample of 200 of the particles, none was found to have a diameter reaching twice the original diameter of 1.3 mm. The amount lost by abrasion during the treatment was 0.1 wt%. The ignition temperature in air at ambient pressure was found to be 223 °C.

### Example 5

Catalyst particles produced according to Example 2 were stored for 108 hours in an air-heated cabinet at 75 °C.

After cooling to ambient temperature these particles displayed similar flow properties as reported in Example 2. In a random sample of 200 of the particles, none was found to have a diameter reaching twice the original diameter of 1.3 mm. The ignition temperature in air at ambient pressure was found to be 212 °C.

### Example 6 (comparative)

200 grams of activated and partially oxidized catalyst particles produced according to Example 1 were placed in a wire basket having openings of 1 mm, which was subsequently dipped into a bath of molten paraffin wax (same material as in Example 2) at 95 °C, so that the catalyst particles were completely covered by the molten paraffin wax at 95 °C for 5 minutes. Subsequently the wire basket was removed from the bath and excess paraffin allowed to drip off at 93 °C for 20 minutes. The catalyst particles were then allowed to cool off to ambient temperature.

The thus prepared catalyst particles were found to have unsatisfactory flow properties. In a random sample of 200 of the particles, 20% were found to have a diameter of more than twice the original diameter of 1.3 mm. The amount lost during the treatment was 0.1 wt%. The ignition temperature in air at ambient pressure was found to be 220 °C.

### Example 7

A commercial particulate hydrogenating catalyst having the properties listed below was used to prepare the presulfurized and coated catalysts.

| | |
|---|---|
| Nickel | 10% |
| Support | Theta Alumina |
| Bulk density | 0.66 kg/l |
| Surface area | 130 m²/g |
| Pore volume | 0.7 ml/g |
| Format | 2.5 mm trilobes |

Prior to the actual presulfurizing, the catalyst particles were reduced with hydrogen at a temperature in excess of 300 °C and then passivated with a mixture of nitrogen and air. 500 grams of the particles were than preheated to 150 °C in a 3 liter drum, rotating at 30 rpm.

The coating and sulfurization mixture was 88.6 wt% of wax Terhell™ 3280 (same wax as in Examples 2-6), and 11.4 wt% of dinonyl pentasulphide (the latter containing 38.64 wt% of sulphur), such that the mixture contained 4.4 wt% of sulphur. 148 gram of the mixture was melted in a beaker and than poured into the rotating drum. The mixture was rapidly absorbed into the porous structure of the catalyst. After rotating the impregnation drum at 30 rpm and 150 °C for another 10 min, the presulfurized catalyst was cooled down to room temperature and collected. Judging by the total weight, the sulfiding agent was completely absorbed by the catalyst precursor and the yield was quantitative. The bulk density of the presulfurized catalyst increased to 0.81 kg/I. The thus prepared catalyst particles were found to be free-flowing and displayed no caking. In a random sample of 200 of the particles, none was found to have a diameter reaching twice the original diameter. The amount lost by abrasion during the treatment was less than 0.1 wt%. On heating in air at ambient pressure to 200 °C, no ignition was found.

32 ml of the presulfurized catalyst (ca. 26 g) was diluted with 80 ml of SiC powder (an inert used to spread the heat of reaction)and loaded into a stainless steel reactor having an inner diameter of 25 mm and a length of 25 cm equipped with 8 thermocouples. The reactor was mounted in a tube furnace. The reactor was pressurised to 4 MPa and hydrogen circulation was established. The catalyst was pre-treated for 4 h at 250 °C with a stream of 100 1/hr H₂. Thereafter hydrogen flow was reduced to 32 1/hr (GHSV = 1000) and liquid feed was pumped in at a rate of 64 ml/hr (LHSV = 2). The feed was a commercial C₅+ pygas. It contained 2.99 wt% styrene, 1.22 wt% indene, less than 0.1 wt% of compounds having more than 10 carbon atoms and it had a bromine number of 87.3.

The reactor was operated at a temperature (average reading of the 8 thermocouples) of 81, 100 and 121 °C, each time during 30 hours. The product of operating at each temperature was analysed by gas chromatography and its content of indene and C₅ mono-olefins determined. By comparing this content to that of the feed, the % conversion of each of these two ingredients at each operating temperature was determined. By plotting % indene conversion against reactor temperature, the temperature at which 90% of the indene was converted was found. In this example it was 97 °C. The % conversion of the C₅ mono-olefins at the same temperature is termed the Selectivity Figure (SF). In this example the SF was 17.5.

The sulfur content of the spent catalyst matched that of the presulfurized catalyst. This shows, that the sulfur from the sulfiding agent very effectively reacts with the nickel on said catalyst during the activation with hydrogen, and sulfur losses are minimal.

### Example 8

All conditions in this example were identical to those of Example 7, except that the catalyst was activated by pre-treating with H₂ during 4 hours at 150 °C instead of 250 °C. The properties of the catalyst were similar to those of Example 7. The performance, determined in the same manner, was: the temperature at which 90% of the indene was converted was 98 °C and the SF was 26.

## Claims

1. A process for producing a particulate catalyst, wherein particles comprising at least one pyrophoric metal in reduced and optionally stabilized form and having a pore volume in the range of from 0.2 to 0.8 cm³/g are treated by gentle mixing with molten paraffin wax in an amount in the range of from 30 to 95 vol%, basis the pore volume of the catalyst particles, for a time sufficient to absorb substantially the whole amount of paraffin wax into the catalyst particles while avoiding abrasion of more than 1 wt% of the catalyst material.

2. A process according to claim 1, **characterized in that** the catalyst particles have a pore volume in the range of from 0.3 to 0.6 cm³/g and a diameter in the range of from 1 to 4 mm, preferably from 1.3 to 3 mm.

3. A process according to claim 1 or claim 2, **characterized in that** the amount of paraffin wax used is from 50 to 95 vol%, preferably from 70 to 95 vol%, basis the pore volume of the catalyst particles.

4. A process according to any one of claims 1 to 3, **characterized in that** the catalyst is one wherein the catalytic metal is selected from the group of nickel, cobalt, molybdenum and copper and mixtures thereof, and the carrier material is selected from the group of alumina, silica, titania, zirconia and magnesia and mixtures thereof, preferably a catalyst comprising nickel or cobalt on alumina or silica carrier.

5. A process according to any one of claims 1 to 4, **characterized in that** the pyrophoric metal is in stabilized form.

6. A process according to any one of claims 1 to 5, **characterized in that** the paraffin wax has a melting temperature in the range of from 60 to 150 °C.

7. A process according to any one of claims 1 to 6, **characterized in that** the catalyst is presulfurized by either elemental sulfur or organic sulfur compounds before stabilization of the particles with the paraffin wax.

8. A process according to any one of claims 1 to 6, **characterized in that** presulfurization and stabilization are performed in one step by mixing from 1 to 30 wt% of an organic sulfur compound with the paraffin wax.

9. A process according to claim 8, **characterized in that** the organic sulfur compound is an organic polysulfide having the general formula R-S(n)-R', wherein n is an integer of from 2 to 10 and R and R' independently are selected from saturated or unsaturated, linear, cyclic and/or branched organic radicals containing from 1 to 20 carbon atoms, which may optionally contain hetero atoms, R' being alternatively a hydrogen atom.

10. A process according to any one of claims 1 to 9, **characterized in that** the temperature during mixing is from 60 to 150 °C and the mixing time is in the range of from 2 to 60 minutes.

11. A process according to any one of claims 1 to 10, **characterized in that** the catalyst particles are preheated before being treated, to a temperature in the range of from 30 to 120 °C.

12. A particulate catalyst produced by a process according to any one of claims 1 to 11.

13. Use of a catalyst produced by a process according to any one of claims 7 to 9, for the selective hydrogenation of highly unsaturated hydrocarbons.

14. Use according to claim 13, **characterized in that** the highly unsaturated hydrocarbons are in a feed of pygas.

## Patentansprüche

1. Verfahren zur Herstellung von Katalysatorpartikeln, wobei Partikel, welche wenigstens ein pyrophores Metall in reduzierter und wahlweise stabilisierter Form umfassen und ein Porenvolumen im Bereich von 0,2 bis 0,8 cm³/g besitzen, durch leichtes Mischen mit geschmolzenem Paraffinwachs in einer Menge im Bereich von 30 bis 95 Vol-%, auf Grundlage des Porenvolumens der Katalysatorpartikel, für eine ausreichende Zeitdauer behandelt werden, um im Wesentlichen die gesamte Menge an Paraffinwachs in die Katalysatorpartikel zu absorbieren, während ein Abrieb von mehr als 1 Gew-% des Katalysatormaterials vermieden wird.

2. Verfahren nach Anspruch 1, **dadurch gekennzeichnet, dass** die Katalysatorpartikel ein Porenvolumen im Bereich von 0,3 bis 0,6 cm³/g und einem Durchmesser im Bereich von 1 bis 4 mm, vorzugsweise von 1,3 bis 3 mm besitzen.

3. Verfahren nach Anspruch 1 oder Anspruch 2, **dadurch gekennzeichnet, dass** die verwendete Menge an Paraffinwachs von 50 bis 95 Vol-%, vorzugsweise von 70 bis 95 Vol-%, auf Grundlage des Porenvolumens der Katalysatorpartikel, beträgt.

4. Verfahren nach einem der Ansprüche 1 bis 3, **dadurch gekennzeichnet, dass** der Katalysator einer ist, worin das katalytische Metall von der Gruppe aus Nickel, Kobalt, Molybdän und Kupfer und Mischungen hievon ausgewählt ist, und das Trägermaterial von der Gruppe aus Aluminiumoxid, Siliziumoxid, Titanoxid, Zirkoniumoxid und Magnesiumoxid und Mischungen hievon ausgewählt ist, vorzugsweise ein Katalysator, umfassend Nickel oder Kobalt auf Aluminiumoxid- oder Siliziumoxidträger ist.

5. Verfahren nach einem der Ansprüche 1 bis 4, **dadurch gekennzeichnet, dass** das pyrophore Metall in stabilisierter Form vorliegt.

6. Verfahren nach einem der Ansprüche 1 bis 5, **dadurch gekennzeichnet, dass** das Paraffinwachs eine Schmelztemperatur im Bereich von 60 bis 150 °C besitzt.

7. Verfahren nach einem der Ansprüche 1 bis 6, **dadurch gekennzeichnet, dass** der Katalysator durch entweder elementaren Schwefel oder organische Schwefelverbindungen vorsulfuriert wird, bevor die Partikel mit dem Paraffinwachs stabilisiert werden.

8. Verfahren nach einem der Ansprüche 1 bis 6, **dadurch gekennzeichnet, dass** die Präsulfurierung und die Stabilisierung in einem Schritt durch Mischen von 1 bis 30 Gew-% einer organischen Schwefelverbindung mit dem Paraffinwachs durchgeführt werden.

9. Verfahren nach Anspruch 8, **dadurch gekennzeichnet, dass** die organische Schwefelverbindung ein organisches Polysulfid mit der allgemeinen Formel R-S(n)-R' ist, wobei n eine ganze Zahl von 2 bis 10 ist und R und R' unabhängig unter gesättigten oder ungesättigten, linearen, zyklischen und/oder verzweigten organischen Resten mit 1 bis 20 Kohlenstoffatomen ausgewählt sind, welche wahlweise Heteroatome enthalten können, wobei R' alternativ ein Wasserstoffatom ist.

10. Verfahren nach einem der Ansprüche 1 bis 9, **dadurch gekennzeichnet, dass** die Temperatur während des Mischens von 60 bis 150 °C beträgt und die Mischdauer im Bereich von 2 bis 60 Minuten beträgt.

11. Verfahren nach einem der Ansprüche 1 bis 10, **dadurch gekennzeichnet, dass** die Katalysatorpartikel vor der Behandlung auf eine Temperatur im Bereich von 30 bis 120 °C vorerhitzt werden.

12. Katalysatorpartikel, hergestellt durch ein Verfahren nach einem der Ansprüche 1 bis 11.

13. Verwendung eines Katalysators, hergestellt durch ein Verfahren nach einem der Ansprüche 7 bis 9, zur selektiven Hydrierung von im hohen Maße ungesättigten Kohlenwasserstoffen.

14. Verwendung nach Anspruch 13, **dadurch gekennzeichnet, dass** die im hohen Maße ungesättigten Kohlenwasserstoffe in einem Pyrolysebenzin-Zulauf vorliegen.

## Revendications

1. Procédé pour produire un catalyseur particulaire, dans lequel des particules comprenant au moins un métal pyrophorique sous une forme réduite et facultativement stabilisée et ayant un volume de pores situé dans la plage allant de 0,2 à 0,8 cm³/g sont traitées par un mélange doux avec de la cire de paraffine fondue selon une quantité dans la plage allant de 30 à 95 % en volume, sur la base du volume de pores des particules de catalyseur, pendant un temps suffisant pour absorber sensiblement toute la cire de paraffine dans les particules de catalyseur tout en évitant une abrasion de plus de 1 % en poids du matériau de catalyseur.

2. Procédé selon la revendication 1, **caractérisé en ce que** les particules de catalyseur ont un volume de pores dans la plage allant de 0,3 à 0,6 cm³/g et un diamètre dans la plage allant de 1 à 4 mm, de préférence de 1,3 à 3 mm.

3. Procédé selon les revendications 1 ou 2, **caractérisé en ce que** la quantité de cire de paraffine utilisée est de 50 à 95 % en volume, de préférence de 70 à 95 % en volume, sur la base du volume de pores des particules de catalyseur.

4. Procédé selon l'une quelconque des revendications 1 à 3, **caractérisé en ce que** le catalyseur est un catalyseur dans lequel le métal catalytique est sélectionné parmi le groupe constitué de nickel, cobalt, molybdène et cuivre et des mélanges de ceux-ci, et le matériau de support est sélectionné parmi le groupe constitué d'alumine, silice, oxyde de titane, oxyde de zircone et oxyde de magnésium et des mélanges de ceux-ci, de préférence un catalyseur comprenant du nickel ou du cobalt sur un support d'oxyde d'aluminium ou un support de silice.

5. Procédé selon l'une quelconque des revendications 1 à 4, **caractérisé en ce que** le métal pyrophorique est sous forme stabilisée.

6. Procédé selon l'une quelconque des revendications 1 à 5, **caractérisé en ce que** la cire de paraffine a une température de fusion située dans la plage allant de 60 à 150°C.

7. Procédé selon l'une quelconque des revendications 1 à 6, **caractérisé en ce que** le catalyseur est présulfuré par du soufre élémentaire ou des composés de soufre organique avant stabilisation des particules avec la cire de paraffine.

8. Procédé selon l'une quelconque des revendications 1 à 6, **caractérisé en ce que** la présulfuration et la stabilisation sont effectuées dans une étape en mélangeant de 1 à 30 % en poids d'un composé de soufre organique avec la cire de paraffine.

9. Procédé selon la revendication 8, **caractérisé en ce que** le composé de soufre organique est un polysulfure organique ayant la formule générale R-S (n) -R', où n est un entier allant de 2 à 10 et R et R' sont de manière indépendante sélectionnés parmi des radicaux organiques cycliques et/ou ramifiés, linéaires, saturés ou insaturés contenant de 1 à 20 atomes de carbone, qui peuvent facultativement contenir des hétéroatomes, R' étant en variante un atome d'hydrogène.

10. Procédé selon l'une quelconque des revendications 1 à 9, **caractérisé en ce que** la température pendant le mélange est de 60 à 150 °C et le temps de mélange est dans la plage allant de 2 à 60 minutes.

11. Procédé selon l'une quelconque des revendications 1 à 10, **caractérisé en ce que** les particules de catalyseur sont préchauffées avant d'être traitées, jusqu'à une température dans la plage allant de 30 à 120 °C.

12. Catalyseur particulaire produit par un procédé selon l'une quelconque des revendications 1 à 11.

13. Utilisation d'un catalyseur produit par un procédé selon l'une quelconque des revendications 7 à 9, pour l'hydrogénation sélective d'hydrocarbures fortement insaturés.

14. Utilisation selon la revendication 13, **caractérisé en ce que** les hydrocarbures fortement insaturés sont dans une alimentation d'essence de pyrolyse.
